**Europäisches Patentamt**

**European Patent Office**

**Office européen des brevets**

(19)

(11) Publication number: **0 118 157**
**A1**

(12) ## EUROPEAN PATENT APPLICATION

(21) Application number: **84200300.6**

(22) Date of filing: **02.03.84**

(51) Int. Cl.³: **A 47 J 37/04**

(30) Priority: **02.03.83 NL 8300762**

(43) Date of publication of application:
**12.09.84 Bulletin 84/37**

(84) Designated Contracting States:
**AT BE CH DE FR GB IT LI LU NL SE**

(71) Applicant: **de Bruyne, Gerrit**
**Molendijk 108**
**NL-3227 CD Oudenhoorn(NL)**

(72) Inventor: **de Bruyne, Gerrit**
**Molendijk 108**
**NL-3227 CD Oudenhoorn(NL)**

(74) Representative: **Lobatto, Jacob Louis, Drs.**
**Octrooi- en Merkenbureau Lobatto Kerkeboslaan 4A**
**NL-2243 CM Wassenaar(NL)**

(54) **Apparatus for grilling of foodstuffs.**

(57) An apparatus for grilling of foodstuffs comprising an at least partially open U-shapedbody (1), closed at both ends by plates (2) and (3), provided with free spaces (4) and (5) respectively for accepting therein a horizontally rotatable cage (6) mounted on turning-points (7), the support points being located in such a manner that the wall of the cage (6) is running substantially concentric with the wall of the U-shaped body (1).

The cage (6) is formed by rods (9) and end plates (16, 18), end plate (16) being provided with a shaft (20), fitting into a counter-opening in shaft (21), which in turn is connected with a motor (22), located in a house (11). The inner wall of the U-shaped body (1) is provided with heat sources (12).

EP 0 118 157 A1

./...

Fig.1

Apparatus for grilling of foodstuffs.

The invention relates to an apparatus for grilling of foodstuffs, such as for example pieces of meat, sausages, as well as pre-fried frozen food products, such as potato-slices and French fries, in particular for use at or on a table before or during meals.

Various grill-apparatuses for grilling of foodstuffs are known. In some of these the foodstuffs are distributed on a fixed horizontal grid and is then heated by heat-radiators, such as for example in ovens which are provided with a grill element. In other grill- or broil-apparatuses the foodstuffs are put on rotating spits and thus passed along heat-radiators, such as is customary for example for grilling of chickens, or also positioned between planes provided with filaments, such as is the case in toast-racks. However, these known grill- and broil-apparatuses have disadvantages. Thus on spreading of foodstuffs of small dimensions on a fixed plate screening of the heat radiation will occur as the individual parts will screen each other completely or partially. Thus it will be necessary to turn over the products to be grilled a number of times or at least to displace with respect to each other in order to obtain a satisfactory final product, that is evenly grilled. In order to meet this disadvantage a combination of grilling and heating in an oven is also used, wherein the air in the oven is heated to an increased temperature and simultaneously a heat-radiator has been positioned in the upper part of the oven as a grill. In this latter case it will be sufficient to turn over the products to be broiled only a few times. Then we have to deal more with a product heated in an oven than with a characteristically broiled product, which appears amongst others from the fact that the crunch which is characteristic on grilling with a heat-radiator, is completely or least partially absent. Moreover an insufficiently browned surface is obtained, even when the product prepared in the oven is already fully done, and similarly when the residence time in the oven is extended so long that the product has already turned dry and/or tough. In addition an oven has the disadvantage of a relatively long re-heat period to attain the required temperature. This temperature is necessary as the heat is transmitted to the foodstuffs substantially completely by convection. Apart from this all ovens have the inconvenience that they are not suitable to be used during a meal on a table or in the immediate vicinity thereof, the latter with the exception of accomodations having a dining-kitchen. In general the transport of an oven to a table implies an extra burden to the housewive.

Apart from the rotating grill-apparatuses, wherein the foodstuffs are moved around with respect to heat radiators put on a spit, an apparatus is described in Dutch Patent Application Nr.7513028, wherein the product to be grilled is positioned in a suspended cage opposite heat radiators. The problem of mutual screening of the relatively small parts of the foodstuffs occurs therewith, similarly as with grilling op a flat grid.

The invention now provides an apparatus for grilling of foodstuffs, wherein the disadvantages mentioned above are avoided completely or at least partially. More in particular the invention provides an apparatus for grilling of foodstuffs, provided with a rotatable cage and heat sources, wherein the apparatus is composed of an at least partially open U-shaped body, closed of at both ends by plates, provided with free spaces for accepting therein a horizontally rotatable cage, mounted on turning-points, the turning-points being positioned in such a manner, that the wall of the cage runs substantially concentric with the wall of the U-shaped body. For grilling of foodstuffs with relatively small dimensions, such as French fries, it is advisable that the cage part is devoid of a shaft, running therethrough, such that the cage is then provided with two shaft parts, extending from the end planes of the cage. The free spaces or orifices in the cage should be of such a dimension, that they are smaller than the smallest dimension of the foodstuffs to be processed.From a practicle point of view it is advisable that only one of the two end plates is removable and the other end plate is fixed to the other parts of the cage.

As occasionally fat and crumbs may fall outside the cage during grilling, which show a tendency to accumulate in the lower part of the apparatus, it is advisable to position the heat radiators in the upward extending wall of the U-shaped body.More in particular it is advisable that the heat sources are mounted in the wall of the U-shaped body, along which the cage is moving upward on rotation.It is also advisable to mount the heat sources below the support points of the turning-points, as the foodstuffs in the cage will then function as a heat insulation, allowing to make the best possible use of the radiation heat.

In order to obtain good results is is advisable that the heat radiators will obtain a surface temperature of at least 300°C within a short time after switching on of the current.

The rotation of the cage can occur manually or mechanically, to which purpose a motor, driven by a spring or electrically.

For obtaining best results it is advisable that the distance between the wall of the cage and the substantially concentrical inner wall of the U-shaped body is within the range of 0.2-2 cm, a distance of 0.3-0.4 cm being preferred for practical reasons.

It has been found to be desirable to mount the heat sources in the wall of the U-shaped body, along which the cage is moving upward on rotation.A particularly suitable embodiment to that purpose are heat sour-

- 4 -

ces fritted into ceramic material.

As the apparatus according to the invention is open at least in part, it is possible to fill in the orifice with an odour absorbing material, that may consist of activated carbon, if the emanating odours are found to be objectionable.

If desired, the orifice of the U-shaped body may be provided in part with a closure.This closure can cover either one side of the orifice in part, or consist of two separate parts which together cover the orifice in part.

The invention will now be elucidated by means of the appending drawings, wherein:

Fig.1 is a view in perspective of an apparatus according to the invention withtransparent front wall,

Fig.2 is a cross-section of the apparatus according to Fig.1 along a line A-A, and

Fig.3 is a cross-section of the apparatus according to Fig.1 along a line B-B.

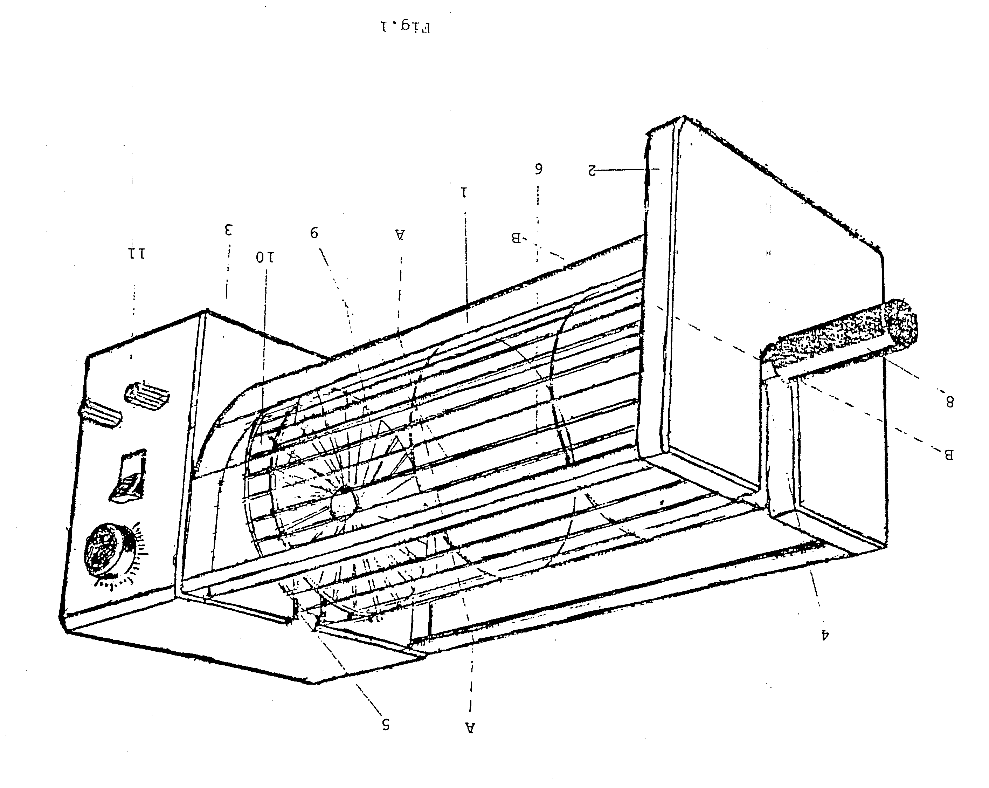

In Fig.1 a U-shaped body 1 is provided at the ends with plates 2 and 3, provided with free spaces 4 and 5 respectively.A cage 6 provided with turning-points of which one turning-point 7 is visible and the other one has not been shown, and a handle 8 is positioned in the free spaces 4 and 5.The cage is formed by rods 9 as well as end plates, of which one 10 is visible and the other one is not shown.Behind plate 3 is a motor(not shown), which can be operated by means of a switchboard 11, that is also provided with an adjustment knob for the temperature of the heat sources(not shown) and a control knob for the velocity of rotation as well as a control knob for switching the motor on and off.This latter knob is not a necessity, though desirable.The cage will rotate clockwise, seen from end plate 10.

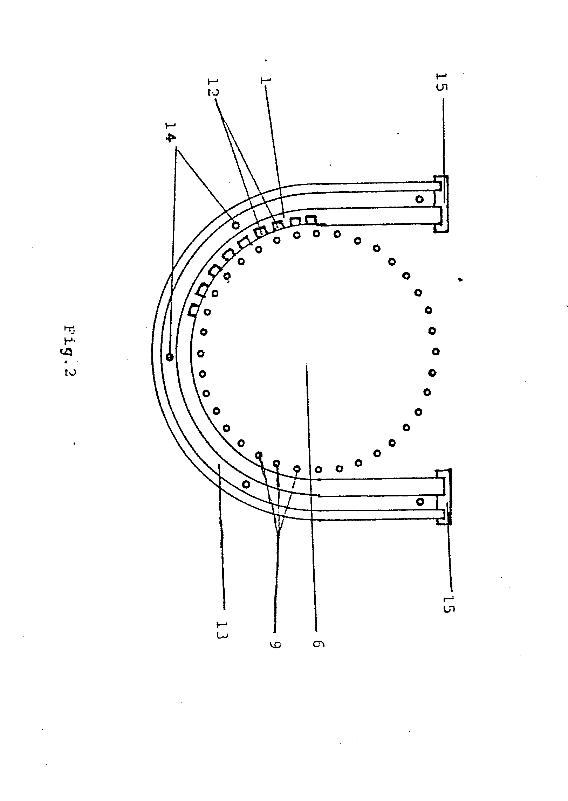

In Fig.2 a cross-section is shown of the apparatus according to Fig.1 along line A-A.Therein cage 6 with rods 9 is running substantially parallel with the inner wall of the U-shaped body 1, wherein the heat sources 12 are fritted into the ceramic material. The U-shaped body is enveloped by a heat-insulating and reflecting layer 13 with draw-bars 14 on end plates, wherein the composing parts are combined by connecting elements 15. The cage is rotating clockwise in the embodiment shown in Fig.2.

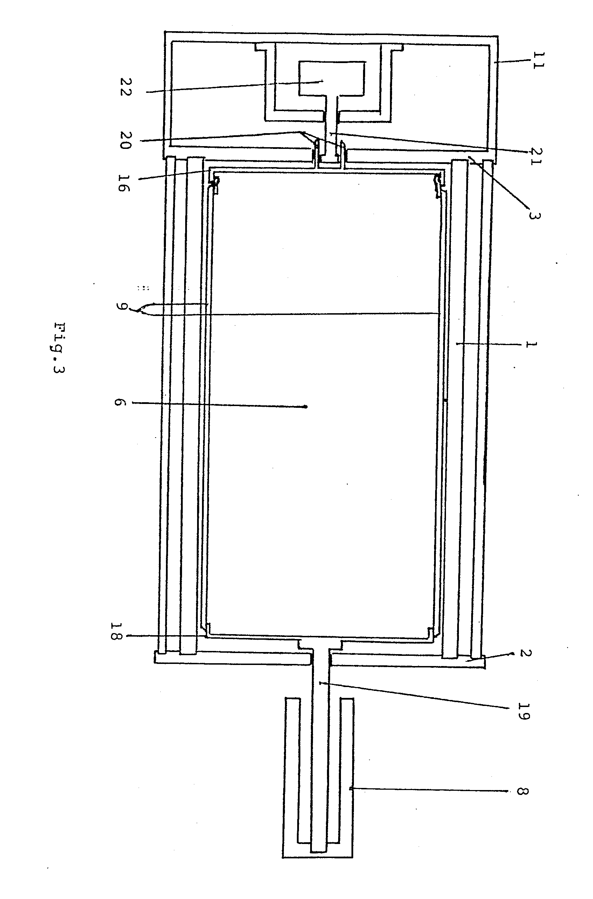

In Fig.3 a cross-section is shown of the apparatus according to Fig.1 along line B-B. Therein the U-shaped body 1 with plates 2 and 3 is provided with a cage 6 with rods 9, as well as a removable end plate 16, provided with a turning-point 17 and a fixed end plate 18, provided with a rotating point 7. End plate 18 is provided with a shaft 19 with a heat insulating handle 8. End plate 16 is provided with a shaft 20, of which the free end is not symmetrical all around and fits into a counter-opening in shaft 21, which in turn is connected with motor 22, which is located in house 11.

It will be obvious by means of the drawings, that the foodstuffs to be processed are brought into cage 6 after removal of end plate 16, whereupon the cage after repositioning of end plate 16, is mounted in the free spaces 4 and 5 with its turning-points. Subsequently the apparatus is set in motion by means of the switches destined for that purpose, until the foodstuffs have acquired the desired properties. During the operation particles and possible droplets of fat falling out of the cage accumulate in the immediate vicinity of the lowest point of the U-shaped body, whereby the heat sources can continue to exert their action on the foodstuffs to be treated substantially undisturbed.

If desired, the open side of the U-shaped body can be covered in part, whereas the remaining part of the orifice is occupied by an odour absorbing material, such as activated carbon.

- 6 -

For the sake of completeness it should be observed that similar results will be obtained if the apparatus as presented in Fig.2 is turned one quarter turn
counterclockwise and the cage is then made to rotate
counterclockwise as well.

It is advisable for an optimal use of the heat
provided by the heat sources, that the inner wall of the
U-shaped body as well as possible covers are made
reflecting as much as possible in order to obtain an
optimal use of the energy supplied.It is advisable, also
from the point of view of this consideration, that the
distance between the cage and the inner wall of the
U-shaped body is kept small and that also the end plates
have been made reflecting at the side facing the foodstuffs.

If foodstuffs have to be treated, which dislodge
much fat during the treatment, it is advisable to provide the apparatus at the lowest point with discharge
openings for the molten fat in order to prevent, that
by running on of molten fat the fat level would rise
up to or aven above the lower side of the cage.

- 1 -

Claims:

1. An apparatus for grilling of foodstuffs, provided with a rotatable cage and heat sources, characterized in that the apparatus comprises an at least partially open U-shaped body, closed at both ends by plates, provided with free spaces for accepting therein a horizontally rotatable cage, mounted on turning-points, of which the support points are located in such a manner that the wall of the cage is running substantially concentric with the wall of the U-shaped body.

2. An apparatus according to claim 1, characterized in that the heat sources consist of heat radiators, positioned in the upward going wall of the U-shaped body.

3. An apparatus according to claim 1 or 2, characterized in that the heat sources are positioned in the wall of the U-shaped body along which the cage will be moving upward on rotation.

4. An apparatus according to one or more of the preceding claims, charaterized in that the heat sources are essentially below the support points of the turning-points of the cage.

5. An apparatus according to one or more of the preceding claims, characterized in that the distance between the wall of the U-shaped body and the wall of the cage amounts to 0.2-2 cm.

6. An apparatus according to claim 5, characterized in that the distance amounts to 0.3-0.8 cm

7. An apparatus according to one or more of the preceding claims, characterized in that the heat sources are part of the wall of the U-shaped body.

8.      An apparatus according to claim 7, characterized in that the heat sources are fritted into ceramic material.

9.      An Apparatus according to one or more of the preceding claims, characterized in that the cage is provided with two shaft parts, extending from the end planes of the cage.

10.     An apparatus according to one or more of the preceding claims, characterized in that an odour absorbing material is positioned in the opening.

11.     An apparatus according to claim 10, characterized in that the odour absorbing material consists of activated carbon.

12.     An apparatus according to one or more of the preceding claims, characterized in that the U-shaped body is provided in part with a closure.

Fig. 1

Fig.2

0118157

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-2 722 172 (GARBO) * Column 2, lines 25-48; figures 4,5 * | 1-5,7 | A 47 J 37/04 |
| A | US-A-2 543 297 (OLMSTED) * Figures 1-3 * | 1-5,7 | |
| A | US-A-1 749 527 (COOK) * Whole document * | 1,9 | |
| A | CH-A- 262 514 (STUDER) * Whole document * | 1-4,9 | |
| A | DE-A-2 040 077 (N.V. PHILIPS) * Whole document * | 1,9 | |
| | | | TECHNICAL FIELDS SEARCHED (Int. Cl. ³) |
| A | NL-A-7 206 872 (N.V. VULCAANSOORD) * Page 4, lines 19,20; page 5, lines 3-13; figure 3a * | 8 | A 47 J |
| A | CH-A- 535 921 (THERMA AG) * Column 2, lines 20-28 * | 10,11 | |

The present search report has been drawn up for all claims

| Place of search | Date of completion of the search | Examiner |
|---|---|---|
| THE HAGUE | 01-06-1984 | SCHARTZ J. |